# EUROPÄISCHE PATENTSCHRIFT

(11) **EP 2 287 587 B1**
(45) Veröffentlichungstag und Bekanntmachung des Hinweises auf die Patenterteilung: **10.10.2012**
(21) Anmeldenummer: 10171974.8
(22) Anmeldetag: 05.08.2010
(51) Int. Cl.: G01M 3/18, G01R 31/08

(54) **Verfahren zur Überwachung von Leckagen an Kunststoffrohren mittels elektrischen Leitern in ihren Wandungen**
Method for monitoring leakages in plastic pipes using embedded electical conductors
Procédé de surveillance de fuites dans des tubes plastiques utilisant des conducteurs électriques dans leur parois

(30) Priorität: 20.08.2009 DE 102009037973
(43) Veröffentlichungstag der Anmeldung: 23.02.2011
(73) Patentinhaber: egeplast Werner Strumann GmbH & Co. KG, 48268 Greven (DE)
(72) Erfinder: Hilchenbach, Klaus, 48165, Münster (DE)
(74) Vertreter: Fritz, Edmund Lothar

(56) Entgegenhaltungen:
- DE-A1- 4 237 477
- DE-A1- 19 544 391

## Beschreibung

Die vorliegende Erfindung betrifft ein Verfahren zur Überwachung von Leckagen an erdverlegten Kunststoffrohren, insbesondere an grabenlos im Erdreich verlegten Kunststoffrohren, welche wenigstens eine Innenschicht aus Kunststoff sowie wenigstens eine Außenschicht aus Kunststoff aufweisen, wobei wenigstens zwei etwa wendelförmige um die Rohrachse verlaufende elektrische Leiter in der Wandung des Kunststoffrohrs so verlegt sind, dass sie miteinander nicht in Berührung kommen und wobei eine Einrichtung verwendet wird, mittels derer gemessen und/oder angezeigt wird, ob ein Stromfluss durch einen der Leiter erfolgt.

Kunststoffrohre für unterirdische Rohrleitungen werden heute zunehmend durch grabenlose Verlegung in das Erdreich eingebracht, da es sich hier um ein kostengünstiges Verfahren mit kürzerer Verlegezeit handelt. In der Regel wird dabei zunächst eine Bohrung in das Erdreich eingebracht und anschließend wird die Rohrleitung durch diese Bohrung in das Erdreich eingezogen.

Um bei der grabenlosen Verlegung die Rohre besser vor Beschädigung zu schützen, ist es aus dem Stand der Technik bekannt (siehe beispielsweise DE 203 05 112 U1) thermoplastische Rohre mit zusätzlichem Schutzmantel aus Kunststoff wie beispielsweise einem Polyolefin für die grabenlose Verlegung zu verwenden. Ziel der additiven Verschleißschicht der Rohrleitungen ist der Schutz der drucktragenden Rohrleitung vor unzulässigen Beschädigungen durch Riefen, Kratzer und flächigen Abtragungen während der grabenlosen Verlegeverfahren.

Um nach der Verlegung festzustellen, ob es zu einer relevanten Beschädigung des Kunststoffrohrs gekommen ist, wird in der DE 20 2004 002 641 U1 ein Prüfsystem für erdverlegte Rohre vorgeschlagen, bei dem ein oder mehrere, in oder auf die Wandung des Rohres wendelfömig aufgebrachte elektrische Leiter dazu verwendet werden, um festzustellen, ob die Wandung des Rohres beschädigt ist. Eine Weiterentwicklung dieses Prüfsystems und des Verfahrens zur grabenlosen Verlegung von Kunststoffrohren ist in der EP 1 564 366 A1 beschrieben. Derartige Prüfsysteme werden insbesondere für mehrschichtige Rohre mit einer Schutzmantelschicht der vorgenannten Art verwendet. Bei dem bekannten System wird zur Prüfung des Rohres am einen Ende des Rohres an den Leiter einmalig eine Stromquelle angeschlossen und am anderen Ende wird eine Anzeigevorrichtung angeschlossen, um danach festzustellen, ob der Stromdurchfluss durch den Leiter unterbrochen ist. Aus einer solchen Unterbrechung des Stromdurchflusses kann dann auf eine Beschädigung der Rohrleitung beispielsweise durch einen scharfkantigen Gegenstand während des Verlegeverfahrens geschlossen werden.

In der DE 10 2006 033 961 A1 ist ein Verfahren zur Ortung einer Beschädigung eines Kunststoffrohres beschrieben, bei dem eine Sonde durch das Kunststoffrohr bewegt wird und elektromagnetische Wellen abstrahlt, die induktiv in die Leiter eingekoppelt werden und Messsignale erzeugen, wobei diese Messsignale in einer Messeinrichtung ausgewertet werden, um eine Beschädigung des Rohres zu erfassen.

Die DE 6 96 14 125 T2 beschreibt ein Rohr aus unterschiedlichen Materialien mit einer durch Extrusion aus Kunststoff hergestellten innersten Schicht, einer außerhalb dieser angeordneten inneren Elektrodenschicht, einer außerhalb dieser angeordneten Isolierschicht aus geschäumten Kunststoff, und einer außerhalb dieser angeordneten äußeren Elektrodenschicht. Die äußere Elektrodenschicht kann aus einem elektrisch leitenden Kunststoff oder einer Aluminiumfolie bestehen. Bei diesem bekannten Rohr wird bei einer Beschädigung der Rohrwandung durch einen elektrisch leitenden Gegenstand, beispielsweise durch einen Nagel, ein Kurzschluss verursacht und so der Benutzer gewarnt, dass eine Beschädigung vorliegt. Das bekannte Rohr kommt eher für beispielsweise Gasleitungen in Betracht, die im Inneren von Gebäuden verlegt sind. Durch die Verwendung einer Schaumstoffschicht handelt es sich nicht um ein normgerechtes Rohr für eine Erdverlegung im Außenbereich.

Weitere Verfahren des Stands der Technik werden in den Dokumenten DE 4 237 477 und DE 19 544 391 A1 beschrieben.

Die Aufgabe der vorliegenden Erfindung besteht darin, ein weiter verbessertes Verfahren zur Überwachung von Leckagen an erdverlegten Kunststoffrohren der eingangs genannten Gattung zur Verfügung zu stellen, welches für genormte Standardrohre geeignet ist und mit vergleichsweise geringem Aufwand eine zuverlässige Überwachung auf Beschädigungen ermöglicht.

Die Lösung dieser Aufgabe liefert ein Verfahren zur Überwachung von Leckagen an erdverlegten Kunststoffrohren der eingangs genannten Gattung mit den kennzeichnenden Merkmalen des Hauptanspruchs.

Erfindungsgemäß ist vorgesehen, dass an einen ersten elektrischen Leiter eine permanente Gleichspannung angelegt ist, dass ein zweiter zum ersten Leiter etwa parallel wendelförmig geführter Leiter geerdet ist und dass ein bei Austritt von in der Kunststoffrohrleitung strömendem Medium und/oder bei Beschädigung der Außenschicht der Rohrleitung zwischen den beiden Leitern auftretender Stromfluss gemessen und/oder angezeigt wird.

Beispielsweise kann zu diesem Zweck der Isolationswiderstand der Anordnung kontinuierlich gemessen und/oder angezeigt werden.

Eine mögliche bevorzugte Lösungsvariante im Rahmen der vorliegenden Erfindung sieht vor, dass die angelegte Gleichspannung im Bereich von etwa 15 V bis etwa 1000 V liegt. Die Erfahrung hat gezeigt, dass Spannungen in dem genannten Bereich, welcher sowohl Niederspannungsbereiche umfasst als auch Spannungen, die um einiges über der Netzspannung liegen, je nach dem jeweiligen Anwendungsbereich in Betracht kommen. Gegebenenfalls wird der Fachmann im Einzelfall durch geeignete einfache Versuche den jeweils auszuwählenden Spannungsbereich der anzulegenden Gleichspannung bestimmen.

Die erfindungsgemäße Lösung sieht gemäß einer Weiterbildung insbesondere vor, dass über eine Stromlaufzeitmessung eine Ortung einer aufgetretenen Leckagestelle erfolgt. Auf diese Weise lässt sich die Leckagestelle rasch auffinden und die Rohrleitung kann repariert werden.

Eine mögliche erfindungsgemäß bevorzugte Lösungsvariante sieht die Verwendung eines elektromagnetischen Wechselfeldes vor, um eine Lokalisierung einer aufgetretenen Leckagestelle von der Erdoberfläche aus zu ermöglichen.

Die vorliegende Erfindung bezieht sich auf mehrschichtige, das heißt mindestens zweischichtige Kunststoffrohre mit mindestens einer Innenschicht und einer Außenschicht, wobei die Außenschicht bevorzugt eine Verschleißschutzschicht ist. Die Außenschicht oder Mantelschicht ist somit vorzugsweise eine Schutzschicht, die das Rohr bei der grabenlosen Verlegung im Erdreich gegen mechanische Einflüsse schützt. Die erfindungsgemäß zu verwendenden wendelförmigen elektrischen Leiter können insbesondere zwischen Innenschicht und Außenschicht angeordnet werden. Bei der Herstellung kann man also beispielsweise so vorgehen, dass man zunächst einen Rohrkern aus beispielsweise einem Polyolefin extrudiert, dann auf diesen Rohrkern die wendelförmigen Leiter aufbringt und dann das so erhaltene Rohr mit der Außenschicht überzieht, die man beispielsweise aufextrudiert. Man kann aber grundsätzlich auch die wendelförmigen Leiter in einen äußeren Randbereich der Innenschicht oder in einen inneren Randbereich der Außenschicht einbetten. Man kann beispielsweise auch ein dreischichtiges oder mehrschichtiges Rohr aus Kunststoff herstellen, bei dem die wendelförmigen elektrischen Leiter in eine mittlere Schicht (Zwischenschicht) zwischen der Innenschicht und der Außenschicht eingebettet sind.

Die Funktion der wendelförmigen elektrischen Leiter ist gemäß einer möglichen bevorzugten Variante derart, dass bei einer Beschädigung des Kunststoffrohres in einem solchen Maße, dass aus dem Innenrohr (der Kernschicht) das in dem Rohr geförderte Medium austreten kann, eine elektrische Verbindung zwischen dem Leiter, an den die Spannung angelegt ist und dem geerdeten Leiter entsteht und somit ein Stromfluss auftritt, der dann mittels der Messeinrichtung oder einer Anzeigeeinrichtung detektiert wird.

Alternativ kann es auch so sein, dass vorwiegend die Außenschicht des Kunststoffrohres beschädigt wird und dann Feuchte aus dem umgebenden Erdreich radial nach innen bis in den Bereich eindringen kann, in dem die beiden elektrischen Leiter verlegt sind, so dass dann wiederum ein Stromfluss zwischen diesen beiden Leitern ermöglicht wird, der gemessen und/oder angezeigt werden kann.

Das erfindungsgemäße Rohr kann bevorzugt wenigstens eine Schicht aus einem Polyolefin aufweisen oder teilweise oder auch vollständig aus Polyolefinen bestehen. Die einzelnen Schichten des Kunststoffrohres sind in der Regel nach der Herstellung stoffschlüssig miteinander verbunden. Die Innenschicht oder Kernschicht ist in der Regel die tragende Schicht des Kunststoffrohrs und muss daher so konzipiert sein, dass je nach Verwendung des Rohrs (beispielsweise als Trinkwasserleitung, Abwasserleitung, Gasleitung etc.) die einschlägigen nach der Norm vorgegebenen Parameter eingehalten werden.

Gegenstand der vorliegenden Erfindung ist weiterhin eine Anordnung zur Überwachung von Leckagen an erdverlegten Kunststoffrohren, insbesondere an grabenlos im Erdreich verlegten Kunststoffrohren, umfassend eine Rohrleitung aus einem oder mehreren Kunststoffrohren, welche wenigstens eine Innenschicht aus Kunststoff sowie wenigstens eine Außenschicht aus Kunststoff aufweisen, wobei wenigstens zwei etwa wendelförmige um die Rohrachse verlaufende elektrische Leiter in der Wandung des Kunststoffrohrs so verlegt sind, dass sie miteinander nicht in Berührung kommen sowie weiterhin umfassend eine Einrichtung, mittels derer insbesondere der Isolationswiderstand gemessen und/oder angezeigt werden kann, mit den Merkmalen des Anspruchs 8.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine schematisch vereinfachte Darstellung eines Kunststoffrohrs mit einer Einrichtung zur Überwachung von Leckagen gemäß einer möglichen beispielhaften Variante der vorliegenden Erfindung;
Figur 2 eine entsprechende Ansicht eines Kunststoffrohrs mit der Einrichtung gemäß Figur 1 bei Auftreten einer Leckage.

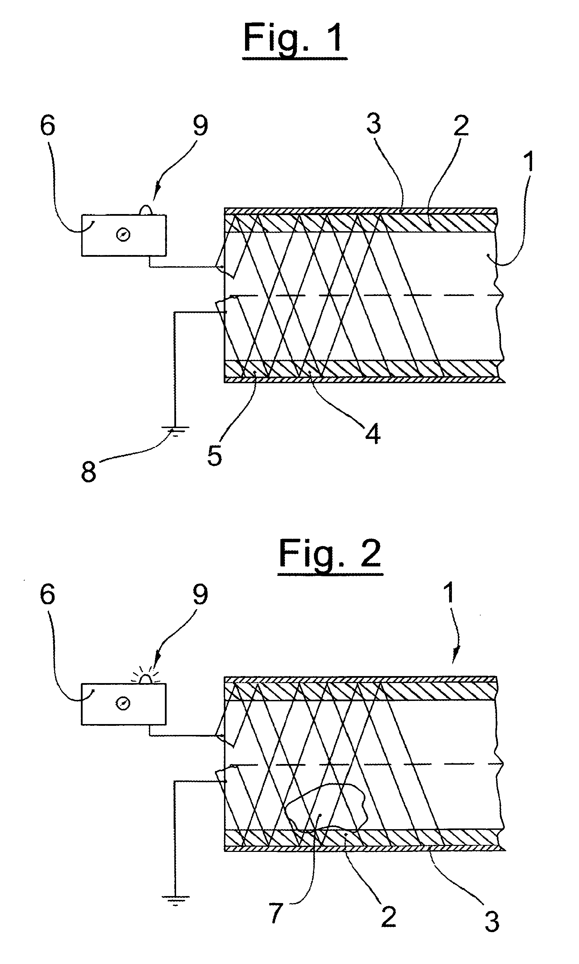

Nachfolgend wird zunächst auf Figur 1 Bezug genommen. Diese zeigt in schematisch vereinfachter Darstellung eine Prinzipskizze einer erfindungsgemäßen Einrichtung zur Überwachung von Leckagen an erdverlegten Kunststoffrohren. Es ist hier nur ein Teilstück einer erdverlegten Rohrleitung aus einem oder mehreren Kunststoffrohren 1 dargestellt. Dieses Kunststoffrohr 1 umfasst eine Innenschicht 2 sowie eine Außenschicht 3, welche stoffschlüssig bei der Herstellung miteinander zu einem Kunststoffrohr verbunden sind. Innerhalb des Kunststoffrohrs ist etwa im Bereich zwischen der Innenschicht 2 und der Außenschicht 3 ein erster wendelförmig angeordneter elektrischer Leiter 4 vorgesehen, der beispielsweise bei der Herstellung spiralförmig um die Achse der Rohrleitung 1 herum auf die Innenschicht 2, die ein Kernrohr bildet, aufgewickelt ist. Parallel zu dem ersten elektrischen Leiter 4 verläuft ebenfalls wendelförmig ein zweiter elektrischer Leiter, der etwa in dem gleichen Schichtbereich verläuft wie der erste elektrische Leiter 4 und der beispielsweise ebenfalls bei der Herstellung des Kunststoffrohrs auf dessen innenschicht aufgewickelt werden kann und zwar derart, dass die Wicklungen des zweiten elektrischen Leiters 5 jeweils immer parallel und mit Abstand zu den Wicklungen des ersten elektrischen Leiters 4 verlaufen und sich daher wie aus der Zeichnung erkennbar ist, beide elektrischen Leiter nirgends untereinander berühren.

Dieses Kunststoffrohr 1 weist vorzugsweise eine glatte Innenfläche auf, so dass sich ein hohlzylindrischer freier Innenquerschnitt ergibt, durch den ein Fluid wie zum Beispiel Gas, Wasser, Abwasser oder dergleichen transportiert wird. Die Außenschicht 3 ist in der Regel ebenfalls außen glatt. In den meisten Fällen dient diese Außenschicht 3 als Schutzschicht, um das Kunststoffrohr gegen mechanische äußere Einflüsse zu schützen, die sich insbesondere ergeben, wenn ein solches Kunststoffrohr grabenlos verlegt wird. Dabei wird das Kunststoffrohr durch das Erdreich gezogen und es kann vorkommen, dass durch einen spitzen Gegenstand eine Beschädigung der Außenschicht bei der Verlegung verursacht wird.

Auf den auch an seiner zylindrischen Außenfläche glatten zylindrischen Rohrkern wird eine Mantelschicht oder Schutzschicht aufgebracht, beispielsweise durch Aufextrudieren. Diese Mantelschicht geht eine stoffschlüssige Verbindung mit dem zylindrischen Rohrkern ein, so dass sich insgesamt ein zweischichtiges innen zylindrisches Rohr ergibt mit einer tragenden Kernschicht und einem Schutzmantel. In der Wandung des Kunststoffrohrs verlaufen die beiden wendelförmigen elektrischen Leiter 4 und 5 etwa in dem Grenzbereich zwischen der Innenschicht 2 und der Außenschicht 3.

Nun ist an den ersten elektrischen Leiter 4 eine Stromquelle angeschlossen, die den Leiter mit einer permanenten Gleichspannung beaufschlagt. Der zweite elektrische Leiter 5 hat eine Erdung 8. Im Normalfall bei intakter Rohrleitung 1 aus Kunststoff fließt kein Strom, da sich die beiden wendelförmigen Leiter 4 und 5, die in dem Kunststoffrohr eingebettet sind, an keiner Stelle berühren und der Kunststoff die beiden Leiter gegeneinander isoliert. Wenn nun wie in Figur 2 dargestellt die Innenschicht 2 des Kunststoffrohrs 1 derart beschädigt ist, dass sich eine Leckagestelle 7 ergibt, aus der in dem Kunststoffrohr transportiertes Medium soweit austreten kann, dass es in den Bereich der Wandung des Rohrs gelangt, in dem die beiden elektrischen Leiter 4, 5 verlegt sind, dann wird durch das Medium (beispielsweise Wasser, Abwasser) ein Kurzschluss zwischen den beiden elektrischen Leitern erzeugt und es fließt folglich nun ein Strom durch die Leiter, der an der Messeinrichtung 6 , die beispielsweise den Isolationswiderstand der Anordnung misst, gemessen werden kann. Diese Einrichtung kann auch beispielsweise mit einer Anzeigevorrichtung 9 wie einer Lampe oder dergleichen versehen sein, die dann aufleuchtet und somit dem Betreiber signalisiert, dass eine Leckage in der Rohrleitung vorliegt.

Wenn beispielsweise durch eine Rißbildung (Spannungsriss oder Beschädigung durch einen spitzen Gegenstand) die Außenschicht 3 des Kunststoffrohrs 1 beschädigt wird, und zwar soweit, dass sich der Riss bis in den Bereich hin nach innen erstreckt, in dem die beiden elektrischen Leiter 4 und 5 verlegt sind, dann dringt Feuchtigkeit aus dem das Kunststoffrohr umgebenden feuchten Erdreich durch den Riss in die Wandung ein, so dass ebenfalls ein Kurzschluss zwischen den beiden elektrischen Leitern auftritt, der durch einen Stromfluss an der Messeinrichtung 6 gemessen und/oder dort an der Anzeigevorrichtung 9 angezeigt werden kann. Das erfindungsgemäße Verfahren ermöglicht somit auch eine frühzeitige Erkennung eines Schadens an dem Kunststoffrohr bereits dann, wenn nur die Außenschicht beschädigt ist und ein entstandener Riss sich nur teilweise durch die Rohrwandung erstreckt, so dass ein Schaden erkannt und behoben werden kann, wenn das Kernrohr (die Innenschicht 2) noch vollständig oder teilweise erhalten ist, so dass noch kein Medium aus dem Rohr austritt.

### Bezugszeichenliste

- 1: Kunststoffrohr
- 2: Innenschicht
- 3: Außenschicht
- 4: erster elektrischer Leiter
- 5: zweiter elektrischer Leiter
- 6: Messeinrichtung
- 7: Leckagestelle
- 8: Erdung
- 9: Anzeigevorrichtung

## Patentansprüche

1. Verfahren zur Überwachung von Leckagen an erdverlegten Kunststoffrohren, insbesondere an grabenlos im Erdreich verlegten Kunststoffrohren, welche wenigstens eine Innenschicht aus Kunststoff sowie wenigstens eine Außenschicht aus Kunststoff aufweisen, wobei wenigstens zwei etwa wendelförmige um die Rohrachse verlaufende elektrische Leiter in der Wandung des Kunststoffrohrs so verlegt sind, dass sie miteinander nicht in Berührung kommen und wobei eine Einrichtung verwendet wird, mittels derer gemessen und/oder angezeigt wird, ob ein Stromfluss durch einen der Leiter erfolgt, **dadurch gekennzeichnet, dass** an einen ersten elektrischen Leiter (4) eine permanente Gleichspannung angelegt ist, dass ein zweiter zum ersten Leiter etwa parallel wendelförmig geführter Leiter (5) geerdet ist und dass ein bei Austritt von in der Kunststoffrohrleitung strömendem Medium und/oder bei Beschädigung der Außenschicht der Rohrleitung zwischen den beiden Leitern (4, 5) auftretender Stromfluss gemessen und/oder angezeigt wird.

2. Verfahren nach Anspruch 1, **dadurch gekennzeichnet, dass** der Isolationswiderstand der Anordnung kontinuierlich gemessen und/oder angezeigt wird.

3. Verfahren nach Anspruch 1 oder 2, **dadurch gekennzeichnet, dass** die angelegte Gleichspannung im Bereich von etwa 15 V bis etwa 1000 V liegt.

4. Verfahren nach einem der Ansprüche 1 bis 3, **dadurch gekennzeichnet, dass** über eine Stromlaufzeitmessung eine Ortung einer aufgetretenen Leckagestelle erfolgt.

5. Verfahren nach einem der Ansprüche 1 bis 4, **dadurch gekennzeichnet, dass** eine Lokalisierung einer aufgetretenen Leckagestelle über eine Ortung eines elektromagnetischen Wechselfeldes erfolgt.

6. Verfahren nach einem der Ansprüche 1 bis 5, **dadurch gekennzeichnet, dass** eine Rohrleitung überwacht wird umfassend miteinander verbundene Rohrstücke aus Kunststoff, diese verbindende Formteile wie Kupplungen, Bögen, T-Stücke, Muffen und/oder gegebenenfalls weitere Bauteile, wobei in wenigstens einem Formteil und/oder weiteren Bauteil ebenfalls zwei wendelförmig zueinander parallel verlaufende Leiter angeordnet sind.

7. Verfahren nach einem der Ansprüche 1 bis 6, **dadurch gekennzeichnet, dass** man an den Verbindungsstellen einzelne Abschnitte der Rohrleitung aus Kunststoff untereinander mittels leitfähigem metallischen Klebeband elektrisch leitend verbindet.

8. Anordnung zur Überwachung von Leckagen an erdverlegten Kunststoffrohren, insbesondere an grabenlos im Erdreich verlegten Kunststoffrohren, umfassend eine Rohrleitung aus einem oder mehreren Kunststoffrohren, welche wenigstens eine Innenschicht aus Kunststoff sowie wenigstens eine Außenschicht aus Kunststoff aufweisen, wobei wenigstens zwei etwa wendelförmige um die Rohrachse verlaufende elektrische Leiter in der Wandung des Kunststoffrohrs so verlegt sind, dass sie miteinander nicht in Berührung kommen sowie weiterhin umfassend eine Einrichtung (9), mittels derer gemessen und/oder angezeigt werden kann, ob ein Stromfluss durch einen der Leiter erfolgt zur Anwendung in einem Verfahren nach einem der Ansprüche 1 bis 7, **dadurch gekennzeichnet, dass** einer erster elektrischer Leiter (4) zum Anlegen einer permanenten Gleichspannung ausgebildet ist dass ein zweiter zum ersten. Leiter etwa parallel wendelförmig geführter Leiter (5) geerdet ist und dass die Einrichtung ausgebildet ist einen bei Austritt von in der Kunst-stoffrohrleitung strömendem Medium und/oder bei Beschädigung der Außenschicht der Rohrleitung zwischen den beiden Leitern (4, 5) auftretenden Stromfluss zu messen und/order anzuzeigen.

9. Anordnung nach Anspruch 8, **dadurch gekennzeichnet, dass** diese weiterhin umfasst die einzelnen Kunststoffrohre miteinander verbindende Formteile wie Kupplungen, Bögen, T-Stücke, Muffen und/oder gegebenenfalls weitere Bauteile, wobei in wenigstens einem Formteil und/oder weiteren Bauteil ebenfalls zwei wendelförmig zueinander parallel verlaufende Leiter angeordnet sind.

10. Anordnung nach einem der Ansprüche 8 oder 9, **dadurch gekennzeichnet, dass** an den Verbindungsstellen einzelne Abschnitte der Rohrleitung aus Kunststoff untereinander mittels leitfähigem metallischen Klebeband elektrisch leitend verbunden sind.

## Claims

1. A method for monitoring leakages in buried plastic pipes, in particular in plastic pipes laid in the ground in a trenchless manner, which have at least one inner layer consisting of plastic and at least one outer layer consisting of plastic, wherein at least two approximately helical electrical conductors which run about the pipe axis are laid in the wall of the plastic pipe in such a manner that they do not come into contact with each other and wherein a device is used, by means of which it is measured and/or displayed whether a current is flowing through one of the conductors, **characterised in that** a permanent DC voltage is applied to a first electrical conductor (4), that a second conductor (5) which is routed in an approximately parallel, helical manner to the first conductor is earthed and that a current flow which arises between the two conductors (4, 5) if medium flowing in the plastic pipeline escapes and/or if the outer layer of the pipeline is damaged is measured and/or displayed.

2. The method according to Claim 1, **characterised in that** the insulation resistance of the arrangement is continuously measured and/or displayed.

3. The method according to Claim 1 or 2, **characterised in that** the applied DC voltage is in the range between approximately 15 V and approximately 1000 V.

4. The method according to one of Claims 1 to 3, **characterised in that** the point of a leakage which has occurred is located by means of a current flow time measurement.

5. The method according to one of Claims 1 to 4, **characterised in that** the point of a leakage which has occurred is located by localisation of an alternating electromagnetic field.

6. The method according to one of Claims 1 to 5, **characterised in that** a pipeline is monitored, comprising pipe pieces which consist of plastic and are connected to each other, moulded parts which connect the latter, such as couplings, elbows, T-pieces, sleeves and/or where necessary other components, wherein two conductors which run parallel to each other in a helical manner are likewise arranged in at least one moulded part and/or other component.

7. The method according to one of Claims 1 to 6, **characterised in that** individual sections of the pipeline consisting of plastic are connected to each other at the connection points in an electrically conductive manner by means of conductive metallic adhesive tape.

8. An arrangement for monitoring leakages in buried plastic pipes, in particular in plastic pipes laid in the ground in a trenchless manner, comprising a pipeline consisting of one or a plurality of plastic pipes, which have at least one inner layer consisting of plastic and at least one outer layer consisting of plastic, wherein at least two approximately helical electrical conductors which run about the pipe axis are laid in the wall of the plastic pipe in such a manner that they do not come into contact with each other and furthermore comprising a device, by means of which it can be measured and/or displayed whether a current is flowing through one of the conductors, for use in a method according to one of Claims 1 to 7, **characterised in that** a first electrical conductor (4) is formed for applying a permanent DC voltage, that a second conductor (5) which is routed in an approximately parallel, helical manner to the first conductor is earthed and that the device is formed to measure and/or display a current flow which arises between the two conductors (4, 5) if medium flowing in the plastic pipeline escapes and/or if the outer layer of the pipeline is damaged.

9. The arrangement according to Claim 8, **characterised in that** it further comprises moulded parts which connect the individual plastic pipes to each other, such as couplings, elbows, T-pieces, sleeves and/or where necessary other components, wherein two conductors which run parallel to each other in a helical manner are likewise arranged in at least one moulded part and/or other component.

10. The arrangement according to one of Claims 8 or 9, **characterised in that** individual sections of the pipeline consisting of plastic are connected to each other at the connection points in an electrically conductive manner by means of conductive metallic adhesive tape.

## Revendications

1. Procédé pour contrôler des fuites sur des tuyaux plastique enterrés, en particulier sur des tuyaux plastique posés sans fossé dans la terre, qui présentent au moins une couche interne en plastique et au moins une couche externe en plastique, au moins deux conducteurs électriques de forme à peu près hélicoïdale et agencés autour de l'axe du tuyau étant posés dans la paroi du tuyau plastique de telle sorte qu'ils ne viennent pas en contact les uns avec les autres et qu'on utilise un dispositif au moyen duquel on mesure et/ou on affiche si un flux de courant passe par l'un des conducteurs, **caractérisé en ce qu'**une tension continue permanente est appliquée sur un premier conducteur électrique (4), **en ce qu'**un second conducteur (5) guidé de façon hélicoïdale à peu près parallèlement au premier conducteur est relié à la terre et **en ce qu'**un flux de courant, qui apparaît en cas de sortie de fluide circulant dans la conduite du tuyau plastique et/ou en cas d'endommagement de la couche externe de la conduite entre les deux conducteurs (4, 5) est mesuré et/ou affiché.

2. Procédé selon la revendication 1, **caractérisé en ce que** la résistance d'isolation de l'agencement est mesurée et/ou indiquée de façon continue.

3. Procédé selon la revendication 1 ou 2, **caractérisé en ce que** la tension continue appliquée se situe dans la plage allant d'environ 15 V à environ 1000 V.

4. Procédé selon l'une des revendications 1 à 3, **caractérisé en ce qu'**une localisation d'un point de fuite apparu s'effectue par une mesure du temps de propagation du courant.

5. Procédé selon l'une des revendications 1 à 4, **caractérisé en ce qu'**une localisation d'un point de fuite apparu s'effectue par une localisation d'un champ alternatif électromagnétique.

6. Procédé selon l'une des revendications 1 à 5, **caractérisé en ce qu'**une conduite est contrôlée, comprenant des bouts de tuyau reliés les uns aux autres en plastique, des pièces moulées reliant ces tuyaux tels que des accouplements, des coudes, des pièces en T, des manchons et/ou éventuellement d'autres composants, sachant qu'également deux conducteurs de forme hélicoïdale, agencés parallèlement entre eux, sont disposés dans au moins une pièce moulée et/ou un autre composant.

7. Procédé selon l'une des revendications 1 à 6, **caractérisé en ce qu'**on relie de façon électroconductrice aux points de liaison certaines parties de la conduite en plastique entre elles au moyen d'une bande adhésive métallique conductrice.

8. Agencement pour contrôler des fuites sur des tuyaux plastique enterrés, en particulier sur des tuyaux plastique posés sans fossé dans la terre, comprenant une conduite comprenant un ou plusieurs tuyaux plastique, qui présentent au moins une couche interne en plastique et au moins une couche externe en plastique, sachant qu'au moins deux conducteurs électriques de forme hélicoïdale, agencés autour de l'axe de tuyau, sont posés dans la paroi du tuyau plastique de telle sorte qu'ils ne viennent pas en contact les uns avec les autres, et comprenant également un dispositif (9), au moyen duquel on peut mesure et/ou afficher si un flux de courant passe par l'un des conducteurs pour l'application dans un procédé selon l'une des revendications 1 à 7, **caractérisé en ce qu'**un premier conducteur électrique (4) est conçu pour l'application d'une tension continue permanente, **en ce qu'**un second conducteur (5) guidé de façon hélicoïdale et à peu près parallèlement au premier conducteur est relié à la terre et **en ce que** le dispositif est conçu pour mesurer et/ou indiquer un flux de courant apparaissant en cas de sortie du fluide circulant dans la conduite en plastique et/ou en cas de détérioration de la couche externe de la conduite entre les deux conducteurs (4, 5).

9. Agencement selon la revendication 8, **caractérisé en ce que** celui-ci comprend également des pièces moulées reliant entre eux les tuyaux plastique individuels tels qu'accouplements, coudes, pièces en T, manchons et/ou éventuellement d'autres composants, sachant qu'également deux conducteurs agencés parallèlement entre eux avec une forme hélicoïdale sont disposés dans au moins une pièce moulée et/ou un autre composant.

10. Agencement selon l'une des revendications 8 ou 9, **caractérisé en ce que**, aux points de liaison, certains tronçons de la conduite en plastique sont reliés de façon électroconductrice entre eux au moyen d'une bande adhésive métallique conductrice.
